# EUROPÄISCHE PATENTSCHRIFT

(11) **EP 3 158 626 B1**
(45) Veröffentlichungstag und Bekanntmachung des Hinweises auf die Patenterteilung: **22.12.2021**
(21) Anmeldenummer: 15731514.4
(22) Anmeldetag: 15.06.2015
(51) Int. Cl.: H02K 9/08, H02K 11/00, F04D 29/58, H02K 9/06

(54) **ELEKTROMOTOR MIT EINEM ROTOR, EINEM STATOR UND EINEM ELEKTRONIKGEHÄUSE SOWIE LÜFTERRAD FÜR EINEN ELEKTROMOTOR**
ELECTRIC MOTOR COMPRISING A ROTOR, A STATOR AND AN ELECTRONIC HOUSING AS WELL AS FAN WHEEL FOR AN ELECTRIC MOTOR
MOTEUR ÉLECTRIQUE POURVU D'UN ROTOR, D'UN STATOR ET D'UN BOÎTIER ÉLECTRONIQUE ET ROUE DE VENTILATEUR POUR MOTEUR ÉLECTRIQUE

(30) Priorität: 20.06.2014 DE 102014009146
(43) Veröffentlichungstag der Anmeldung: 26.04.2017
(73) Patentinhaber: ZIEHL-ABEGG SE, 74653 Künzelsau (DE)
(72) Erfinder: GEISSLER, Samantha, 74653 Ingelfingen (DE); STURM, Thorsten, 74238 Krautheim (DE); KNORR, Joachim, 97996 Niederstetten (DE); SCHÜTZ, Julian, 74635 Kupferzell (DE)
(74) Vertreter: Jackisch-Kohl, Anna-Katharina
(86) Internationale Anmeldenummer: PCT/EP2015/001196
(87) Internationale Veröffentlichungsnummer: WO 2015/192954

(56) Entgegenhaltungen:
- EP-A1- 1 715 565
- WO-A1-2008/006934
- CN-A- 101 846 087
- DE-U1- 20 211 857
- JP-A- H11 243 668
- US-A- 1 335 129
- US-A- 6 130 491

## Beschreibung

Die Erfindung betrifft einen Elektromotor mit einem Rotor, einem Stator und einem Elektronikgehäuse nach dem Oberbegriff des Anspruches 1.

Die beim Einsatz von Elektromotoren entstehende Wärme wird abgeführt, wobei häufig Lüfterräder eingesetzt werden, die einen Kühlluftstrom erzeugen (J P H11 243668 A). Das Lüfterrad ist in einem Einbauraum eines Elektronikgehäuses angeordnet, in dem sich die zu kühlenden elektrischen/elektronischen Komponenten befinden, die auf einer Leiterplatine sitzen. Das Lüfterrad liegt den zu kühlenden Komponenten mit Abstand gegenüber, wodurch jedoch nur eine ungenügende Kühlung dieser Komponenten möglich ist. Hierzu trägt bei, dass das Lüfterrad die Luft lediglich verwirbelt.

Weiter ist aus der DE 103 13 274 A1 ein Elektromotor bekannt, bei dem das Lüfterrad zwischen dem Statorflansch und der Steuerelektronik angeordnet ist. Das Lüfterrad verwirbelt die Luft lediglich, weshalb die im Elektronikgehäuse untergebrachten elektrischen/elektronischen Komponenten nur unzureichend gekühlt werden.

Es ist weiter bekannt (US 6 141 217 A), in einem Einbauraum eines Elektronikgehäuses eines Elektromotors ein Lüfterrad anzuordnen. Die zu kühlenden Komponenten befinden sich im Bereich oberhalb des Lüfterrades, dessen Schaufeln von einer auf der Rotorwelle sitzenden Scheibe abstehen. Mit einem solchen Lüfterrad lässt sich jedoch ein gezielter Kühlluftstrom und damit eine optimale Kühlung der im Einbauraum untergebrachten Komponenten nicht erreichen. Die Kühlluft wird durch dieses Lüfterrad lediglich im Zentrumsbereich verwirbelt.

Es ist weiter eine Lüfteranordnung zur Kühlung von Kraftfahrzeug-Motoren bekannt (DE 202 11 857 U1), bei der in einem Elektronikgehäuse ein Lüfterrad zur Kühlung der Motorelektronik untergebracht ist. Das Lüfterrad wird durch einen Drehstellungsgeber gebildet, der zusätzliche Kühlflügel aufweist.

Der Erfindung liegt die Aufgabe zugrunde, den gattungsgemäßen Elektromotor so auszubilden, dass die im Einbauraum des Elektronikgehäuses befindlichen elektrischen/elektronischen Komponenten optimal gekühlt werden.

Diese Aufgabe wird beim gattungsgemäßen Elektromotor erfindungsgemäß mit den kennzeichnenden Merkmalen des Anspruches 1 gelöst.

Beim erfindungsgemäßen Elektromotor erzeugt das Lüfterrad einen definierten Kühlluftstrom innerhalb des Einbauraums. Hierzu ist das Lüfterrad so ausgebildet und angeordnet, dass die Kühlluft im Einbauraum in einem Kühlkreisstrom geführt wird, indem die Kühlluft zentral vom Lüfterrad angesaugt und etwa radial nach außen abgegeben wird. Das Lüfterrad befindet sich im Bereich zwischen diesen Komponenten, die um das Lüfterrad verteilt angeordnet sind. Dadurch liegen alle Komponenten im Kühlluftstrom des Lüfterrades, so dass eine hervorragende Ableitung der Wärme von den Komponenten gewährleistet ist.

Die Schaufeln des Lüfterrades liegen im Bereich zwischen einer Deckscheibe und einer Bodenscheibe des Lüfterrades. Auf diese Weise lässt sich ein gerichteter Luftstrom beim Drehen des Lüfterrades erzielen.

Infolge der Deckscheibe wird die Kühlluft vom Lüfterrad zentral angesaugt, die durch die Deckscheibe hindurch axial in den Bereich der Schaufeln gelangt, welche die Kühlluft anschließend zwischen der Deckscheibe und der Bodenscheibe etwa radial nach außen fördern. Die Schaufeln sind hierbei vorteilhaft so angeordnet, dass sie sich, in Achsrichtung des Lüfterrades gesehen, radial nach innen über die Deckscheibe erstrecken.

Aufgrund dieser Ausbildung kann das Lüfterrad im Bereich zwischen den Komponenten angeordnet werden, so dass der Einbauraum und damit das Elektronikgehäuse keine große axiale Baulänge benötigen.

Die Seitenwand des Einbauraumes und ein den Einbauraum verschließender Deckel bilden Führungen für die Kühlluft. Wenn die Kühlluft radial nach außen gefördert wird, trifft sie auf die Seitenwand des Einbauraumes und wird an ihr in Richtung auf den Deckel abgelenkt. Hier wird die Kühlluft erneut abgelenkt, so dass sie längs der Innenseite des Deckels in Richtung auf die Deckelmitte strömt. Hier gelangt die Kühlluft in den Ansaugbereich des Lüfterrades, so dass die Kühlluft zentrisch axial angesaugt wird. Auf diese Weise wird ein gezielter Kühlluftkreisstrom über den Umfang des Einbauraumes erzeugt, der zu einer optimalen Kühlung der Komponenten im Einbauraum führt. An der Seitenwand und am Deckel kann die Kühlluft zumindest einen Teil der Wärme abgeben.

Das Lüfterrad ist bevorzugt zentrisch im Einbauraum angeordnet, so dass der Kühlluftstrom über den Umfang des Einbauraumes gleichmäßig verteilt gefördert werden kann.

Wenn die Innenwand des Einbauraumes im Wesentlichen zylindrisch ausgebildet ist, ergibt sich eine gleichmäßige Verteilung der Kühlluft über den gesamten Umfang des Einbauraumes.

Die Leiterplatine, auf der zumindest ein Teil der zu kühlenden Komponenten sitzt, liegt mit Abstand vom Statorflansch, der den Einbauraum gegen den Rotor hin abschließt. Die Leiterplatine ist mit einer Öffnung versehen, durch welche sich das Lüfterrad hindurch in den Einbauraum erstreckt.

An den Statorflansch schließt eine Statorbuchse an, in der eine Rotorwelle drehbar gelagert ist. Der Statorflansch und die Statorbuchse sind vorteilhaft einstückig miteinander ausgebildet.

Bei einer bevorzugten Ausbildung ist das Lüfterrad zumindest zweiteilig ausgebildet. In diesem Fall besteht das Lüfterrad aus einem die Schaufeln enthaltenden Grundkörper und einem Anschlussteil. Diese beiden Bestandteile des Lüfterrades sind drehfest mit der Rotorwelle verbunden. Aufgrund der zweiteiligen Ausbildung kann das Lüfterrad einfach und preisgünstig hergestellt und im Elektromotor montiert werden.

Vorteilhaft weist der Grundkörper die Deckscheibe und das Anschlussteil die Bodenscheibe für die Schaufeln auf. Werden der Grundkörper und das Anschlussteil zur Bildung des Lüfterrades miteinander verbunden, dann erstrecken sich die Schaufeln zwischen der Deckscheibe und der Bodenscheibe. Da die Bodenscheibe und die Deckscheibe auf die beiden Bestandteile des Lüfterrades verteilt sind, lassen sich der Grundkörper und das Anschlussteil jeweils sehr einfach herstellen, insbesondere durch Spritzgießen.

Eine einfache Verbindung der beiden Teile des Lüfterrades ergibt sich, wenn der Grundkörper und das Anschlussteil mit jeweils einer Hülse ineinander greifen. Dann können die beiden Teile durch einen einfachen Steckvorgang miteinander verbunden werden,

Hierbei ist von Vorteil, wenn die Hülse des Grundkörpers so in die Hülse des Anschlussteiles eingesetzt wird, dass sie radiales Spiel zur Innenwand der Hülse des Anschlussteiles hat.

Die beiden Hülsen können hierbei in Richtung auf ihre freien Enden konisch verjüngt ausgebildet sein, wodurch der Fügevorgang erleichtert wird. Außerdem bilden die konischen Hülsen Entformschrägen beim Spritzgießen.

Die innen liegende Hülse des Grundkörpers kann so gestaltet sein, dass sie mit einer Befestigungsschraube auf die Rotorwelle geschraubt wird

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: einen erfindungsgemäßen Elektromotor teilweise im Axialschnitt und teilweise in Ansicht,
- Fig. 2: das Elektronikgehäuse des Elektromotors gemäß Fig, 1 teilweise im Axialschnitt und teilweise in Ansicht,
- Fig. 3 u. Fig. 4: den erfindungsgemäßen Elektromotor in Darstellungen entsprechend den Fig. 1 und 2, wobei jedoch ein Lüfterrad des erfindungsgemäßen Elektromotors im Axialschnitt dargestellt ist,
- Fig. 5: in perspektivischer Darstellung und im Axialschnitt den Bereich des Elektronikgehäuses des erfindungsgemäßen Elektromotors,
- Fig. 6: den Elektromotor in einer Darstellung entsprechend Fig. 3 mit eingezeichnetem Strömungsverlauf der Kühlluft,
- Fig. 7: eine Draufsicht auf einen Grundkörper des Lüfterrades,
- Fig. 8: eine Seitenansicht des Grundkörpers des Lüfterrades gemäß Fig. 7,
- Fig. 9: eine Unteransicht des Grundkörpers des Lüfterrades,
- Fig. 10: den Grundkörper des Lüfterrades in perspektivischer Darstellung,
- Fig. 11: in perspektivischer Darstellung den Grundkörper des Lüfterrades,
- Fig. 12: eine Draufsicht auf ein Anschlussteil des Lüfterrades,
- Fig. 13: in vergrößerter Darstellung und in Seitenansicht das Anschlussteil des Lüfterrades,

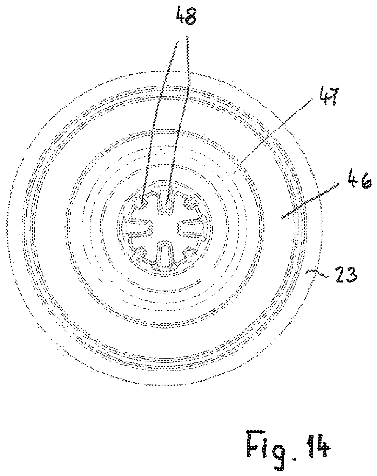

- Fig. 14: eine Unteransicht des Anschlussteiles des Lüfterrades,
- Fig. 15: das Anschlussteil des Lüfterrades in perspektivischer Darstellung und schräg von oben,
- Fig. 16: in perspektivischer Darstellung schräg von unten das Anschlussteil des Lüfterrades,

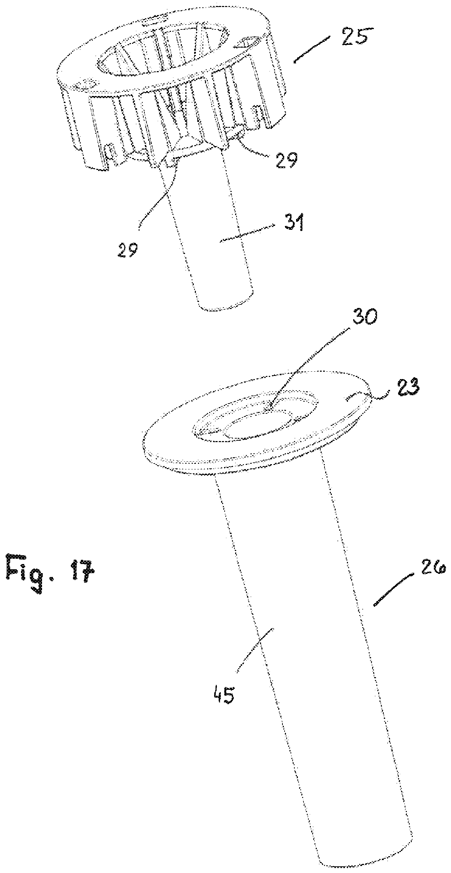

- Fig. 17: in perspektivischer und explosiver Darstellung den Grundkörper und das Anschlussteil des Lüfterrades.

Der Elektromotor ist als Außenläufermotor ausgebildet, insbesondere als elektronisch kommutierter Gleichstrom-Außenläufermotor. Er hat einen Stator 1 mit einer Statorbuchse 2, von der in den Zeichnungen lediglich das obere Ende erkennbar ist. An die Statorbuchse 2 schließt ein Statorflansch 3 an, der vorteilhaft einstückig mit der Statorbuchse 2 ausgebildet ist. In der Statorbuchse ist eine (nicht dargestellte) Rotorwelle drehbar gelagert, auf der drehfest ein Rotormantel 4 sitzt. Er ist haubenförmig ausgebildet und mit seinem Boden 5 auf der Rotorwelle drehfest befestigt. An dem dem Statorflansch 3 benachbarten Ende ist der Rotormantel 4 mit einem umlaufenden Ringflansch 6 versehen, der parallel zum Statorflansch 3 verläuft und auf seiner dem Statorflansch zugewandten Seite mit Kühlrippen 7 versehen ist. Sie sind über den Umfang des Ringflansches 6 gleichmäßig verteilt angeordnet und erstrecken sich jeweils vorteilhaft radial. Die Kühlrippen 7 können aber auch einen Winkel mit der jeweiligen Radialen einschließen oder auch von einem geraden Verlauf abweichend ausgebildet sein.

Auf der Statorbuchse sitzt ein (nicht dargestelltes) Statorblechpaket mit entsprechenden Wicklungen. An der Innenseite des Rotormantels 4 befinden sich Permanentmagnete, die unter Bildung eines Luftspaltes das Statorblechpaket umgeben,

Der Statorflansch 3 ist an seiner dem Ringflansch 6 des Rotors 8 zugewandten Seite mit Kühlrippen 9 versehen, die vorteilhaft gleichmäßig über den Umfang des Statorflansches verteilt angeordnet sind und sich vorteilhaft jeweils radial erstrecken. Die Kühlrippen 9 liegen mit geringem axialem Abstand den Kühlrippen 7 des Rotors 8 gegenüber. Die Kühlrippen 9 können auch einen Winkel mit der jeweiligen Radialen einschließen oder eine von einem geraden Verlauf abweichende Ausbildung haben. Beim Einsatz des Elektromotors wird durch die rotorseitigen Kühlrippen 7 in Verbindung mit den Kühlrippen 9 eine Luftverwirbelung im Bereich zwischen den Kühlrippen 7, 9 erzeugt.

Die Kühlrippen 7, 9 als Kühlelemente sind nur beispielhaft zu verstehen. Die Kühlelemente können auch durch andere Gestaltungen des Statorflansches 3 bzw. des Ringflansches 6 gebildet sein. Ebenso ist es möglich, die einander zugewandten Seiten von Statorflansch 3 und Ringflansch 6 eben auszubilden.

Der Statorflansch 3 hat einen geringfügig größeren Außendurchmesser als der Ringflansch 6 des Rotors 8. Der Statorflansch 3 ist mit Durchtrittsöffnungen 10 für Befestigungsschrauben versehen, mit denen der Elektromotor in der Einbaulage befestigt werden kann.

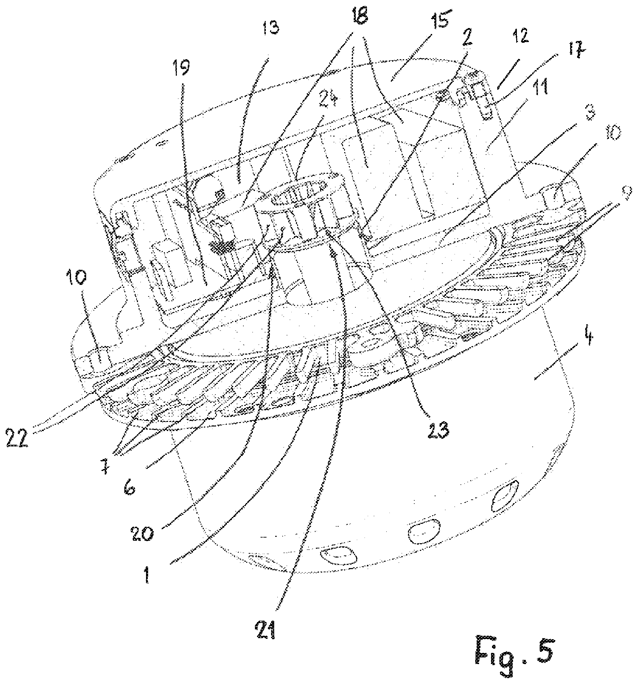

Auf der vom Ringflansch 6 abgewandten Seite steht vom Statorflansch 3 eine Wand 11 eines Elektronikgehäuses 12 senkrecht ab. Die Wand 11 verläuft vorteilhaft zylindrisch und begrenzt einen Einbauraum 13 des Elektronikgehäuses radial nach außen. Die Wand 11 ist vorteilhaft einstückig mit dem Statorflansch 3 ausgebildet und weist am Umfang eine Vertiefung 14 auf, durch die von außen in bekannter Weise Anschlusskabel in den Einbauraum 13 geführt werden können. Die Vertiefung 14 wird durch wenigstens ein Verschlusselement geschlossen, durch das die Anschlusskabel abgedichtet in den Einbauraum 13 ragen. Der Einbauraum 13 wird durch einen Deckel 15 geschlossen, der unter Zwischenlage wenigstens einer Dichtung 16, vorzugsweise eines Dichtringes, auf der Stirnseite der Wand 11 mittels Schrauben 17 lösbar befestigt wird. Die Schraubenköpfe liegen vorteilhaft versenkt in der Deckeloberseite (Fig. 5).

Im Einbauraum 13 des Elektronikgehäuses 12 befinden sich schematisch dargestellte elektrische/elektronische Komponenten 18, die zum Betrieb des Elektromotors erforderlich sind. Sie sitzen auf einer Leiterplatine 19, die in geeigneter Weise im Einbauraum 13 montiert ist. Im Ausführungsbeispiel hat die Leiterplatine 19 Abstand vom Statorflansch 3. Zentral ist die Leiterplatine 19 mit einer Öffnung 20 versehen, durch welche das obere Ende der Statorbuchse 2 ragt.

Zur Kühlung der Komponenten 18 im Elektronikgehäuse 12 ist ein Lüfterrad 21 vorgesehen, das sich auf der vom Statorflansch 3 abgewandten Seite der Leiterplatine 19 innerhalb des Einbauraumes 13 befindet. Es ist drehfest mit der Rotorwelle verbunden und dreht zusammen mit dem Rotor 8. Das Lüfterrad 21 hat Schaufeln 22, die über den Umfang des Lüfterrades verteilt angeordnet sind und mit denen ein Luftstrom im Einbauraum 13 erzeugt wird. Die Schaufeln 22 erstrecken sich zwischen einer Bodenscheibe 23 und einer Deckscheibe 24. Die Bodenscheibe 23 liegt mit Abstand außerhalb der Statorbuchse 2 innerhalb des Einbauraums 13.

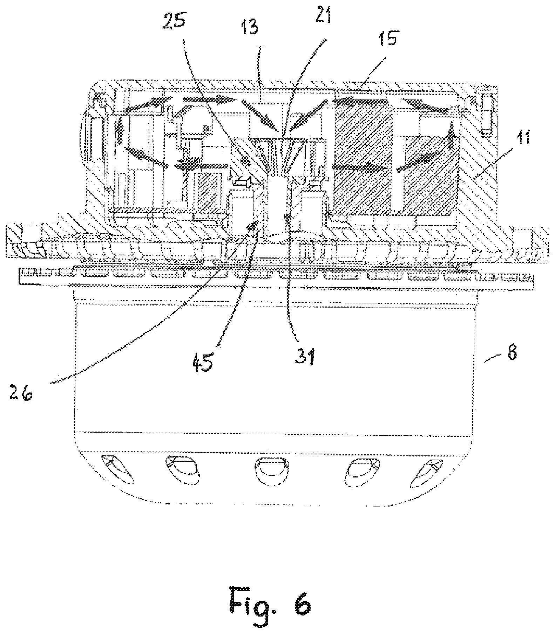

Das Lüfterrad 21 befindet sich im Zentrum des Einbauraumes 13 und saugt die kühle Luft zentrisch an, wie durch die Strömungspfeile in Fig. 6 verdeutlicht wird. Die Schaufeln 22 sind so angeordnet, dass die zentrisch angesaugte Kühlluft radial nach außen geleitet wird. Dabei strömt die Kühlluft an den Komponenten 18 im Einbauraum 13 vorbei und nimmt die an den Komponenten 18 entstehende Wärme auf. Die elektrischen/elektronischen Komponenten 18 werden auf diese Weise zuverlässig gekühlt. An der Wand 11 wird der Kühlluftstrom nach innen umgelenkt und erneut zentrisch vom Lüfterrad 21 angesaugt. Auch der Deckel 15, der den Einbauraum 13 abschließt, trägt zur Umlenkung des Kühlluftstromes bei, wie sich aus Fig. 6 ergibt. Auf diese Weise wird durch das Lüfterrad 21 im Einbauraum 13 ein definierter Kühlluftstrom sowie eine Verwirbelung zwischen den Komponenten 18 erzeugt. Die Kühlluft wird über den gesamten Umfang des Einbauraumes 13 in der beschriebenen Weise zwischen den Elektronikkomponenten 18 geleitet

Eine optimale und zuverlässige Kühlung der Komponenten 18 wird insbesondere dann erreicht, wenn die innenseite der Wand 11 des Elektronikgehäuses 12 rotationssymmetrisch um die Drehachse des Lüfterrades 21 angeordnet ist. Dann ergibt sich ein gleichmäßiger Luftstrom über den Umfang der Wand 11.

Vorteilhaft sind die Komponenten 18 auf der Leiterplatine 19 so angeordnet, dass die Kühlluft optimal an ihnen vorbeigeleitet werden kann. Insbesondere können die Komponenten so verteilt angeordnet sein, dass nicht die eine Komponente im Strömungsschatten einer davor liegenden Komponente 18 liegt. Durch den Kühlluftstrom werden Hotspots an temperaturkritischen Bauteilen vermieden.

Die Wärme wird teilweise bei der Umlenkung der Kühlluft an die Wand 11 des Elektronikgehäuses 12 und gegebenenfalls an den Deckel 15 abgegeben.

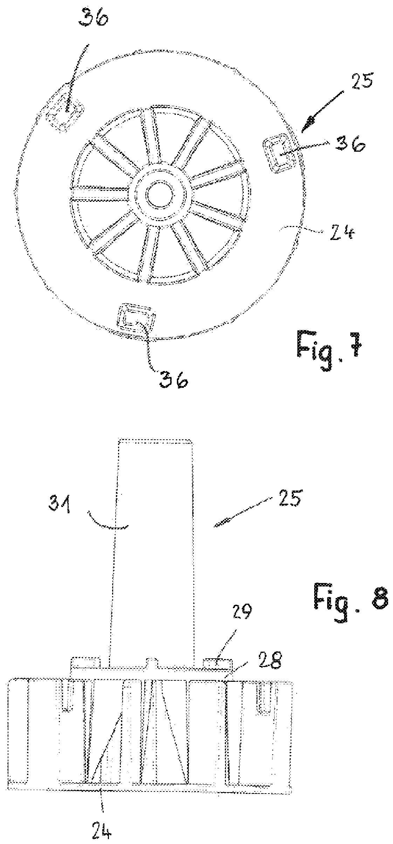

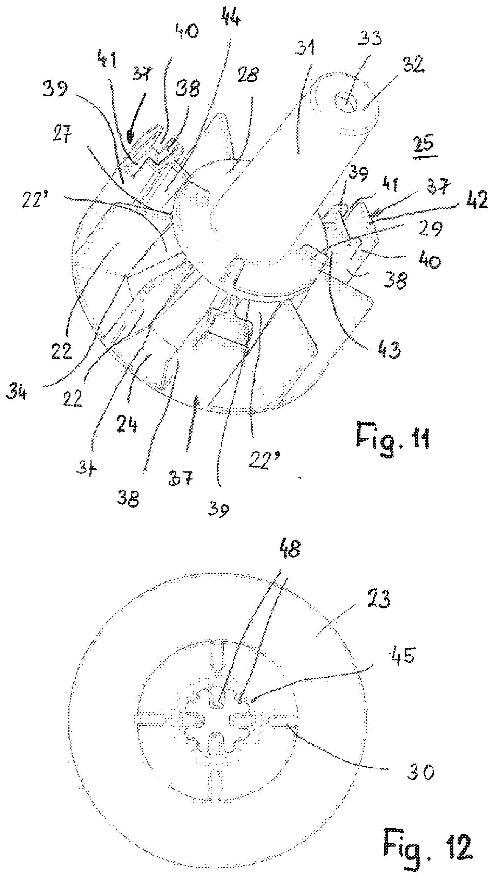

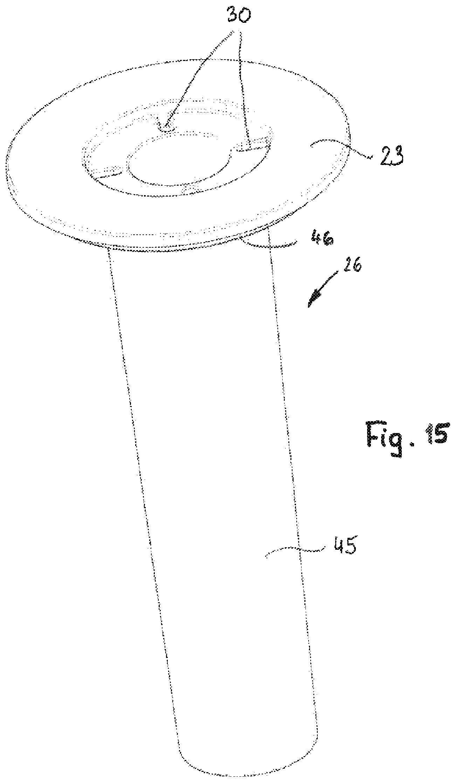

Das Lüfterrad ist zweiteilig ausgebildet und hat den Grundkörper 25 sowie ein Anschlussteil 26. Der Grundkörper 25 hat die ringförmige Deckscheibe 24 (Fig. 7 bis 11), die im Ausführungsbeispiel eben ausgebildet ist, aber auch eine gewölbte Form (mit Saugmund) haben kann. Von der Unterseite der Deckscheibe 24 stehen senkrecht die Schaufeln 22 ab, die sich über die radiale Breite der Deckscheibe 24 erstrecken und vorteilhaft einstückig mit ihr ausgebildet sind. Die Schaufeln 22 sind am radial inneren Eckbereich 27 (Fig. 11) an eine ringförmige Zwischenscheibe 28 angebunden, die kleineren Außendurchmesser als die Deckscheibe 24 hat. Von der von der Deckscheibe 24 abgewandten Unterseite stehen von der Zwischenscheibe 28 Rippen 29 ab, die beispielhaft einen Winkelabstand von 90° voneinander haben. Die Rippen 29 bilden Formschlussteile, die in montierter Lage in entsprechende Vertiefungen 30 (Fig. 15) des Anschlussteiles 26 eingreifen, Die Rippen 29 erstrecken sich vom äußeren Rand der Zwischenscheibe 28 aus radial und enden mit Abstand von einer Befestigungshülse 31, die zentrisch von der Zwischenscheibe 28 auf der von der Deckscheibe 24 abgewandten Seite absteht. Die Befestigungshülse 31 verjüngt sich in Richtung auf ihr freies Ende konisch und ist am freien Ende mit einer Abschlussscheibe 32 versehen, die zentrisch mit einer Öffnung 33 für eine (nicht dargestellte) Befestigungsschraube versehen ist. Die Abschlussscheibe 32 liegt in einer Radialebene der Befestigungshülse 31,

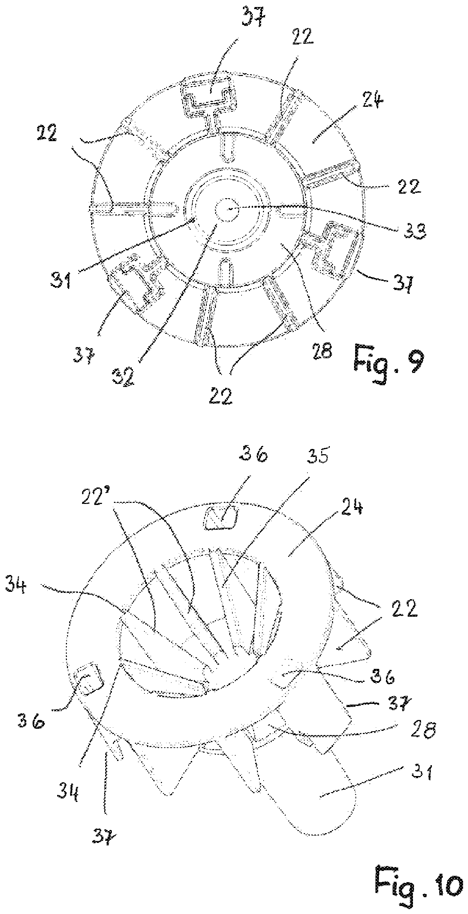

Die Schaufeln 22 haben, wie beispielsweise aus Fig. 11 hervorgeht, rechteckigen Umriss. Radial nach innen schließt an die Schaufeln 22 jeweils eine in Ansicht dreieckförmige Schaufel 22' an, die sich über die radiale Breite der Zwischenscheibe 28 erstreckt und sich in Richtung auf die Deckscheibe 24 derart verjüngt, dass die Schaufeln 22' mit ihrem einen Eckbereich 34 (Fig. 11) an den inneren Rand der Deckscheibe 24 anschließen. Die Schaufeln 22, 22' liegen beim dargestellten Ausführungsbeispiel jeweils in Radialebenen, wobei der radial innere Rand 35 der dreieckförmige Schaufeln 22' vom radial inneren Rand der Zwischenscheibe 28 aus schräg nach außen so verläuft, dass der Eckbereich 34 dieser Schaufeln 22' an den inneren Rand der Deckscheibe 24 anschließt (Fig. 10)

Die Deckscheibe 24 weist, wie aus Fig. 10 hervorgeht, beispielhaft drei Öffnungen 36 auf, die vorteilhaft über den Umfang der Deckscheibe 24 gleichmäßig verteilt angeordnet sind. An die Öffnungen 36, die beispielhaft rechteckigen Umriss haben, schließt an die Unterseite der Deckscheibe 24 jeweils eine Hohlkammer 37 an. Sie hat rechteckigen Umriss (Fig. 11) und ist am freien Ende offen. In den beiden Seitenwänden 38, 39, die sich quer zur Umfangsrichtung der Deckscheibe 24 erstrecken, befinden sich auf gleicher Höhe Vertiefungen 40, 41, die jeweils gleich tief sind. Die Seitenwände 38, 39 schließen senkrecht an Seitenwände 42, 43 an, von denen die Seitenwand 42 in Höhe des äußeren Randes der Deckscheibe angeordnet ist. Die parallel zu ihr verlaufende Seitenwand 43 hat Abstand vom inneren Rand der Deckscheibe 24. In halber Umfangsbreite der Wand 43 steht senkrecht eine Rippe 44 ab, die gleiche Höhe wie die Hohlkammer 37 hat und mit ihrem einen Rand an den äußeren Rand der Zwischenscheibe 28 und dem gegenüberliegenden Rand an den inneren Rand der Deckscheibe 24 anschließt. Die Hohlkammern 37 haben gleiche axiale Höhe wie die Schaufeln 22. Wie aus Fig. 9 beispielhaft hervorgeht, liegen zwischen in Umfangsrichtung benachbarten Hohlkammern 37 jeweils zwei Schaufeln 22.

Die Hohlkammern 37 können beispielsweise zur Aufnahme von Magneten dienen, die beispielhaft zur Drehzahlerfassung des Rotors 8 verwendet werden.

Der gesamte Grundkörper 25 des Lüfterrades 21 ist vorteilhaft einstückig aus Kunststoff hergestellt, vorzugsweise als Spritzgussteil. Wenn die Schaufeln 22, 22' radial verlaufend ausgebildet sind, sind keine aufwändigen Spritzgussformen erforderlich.

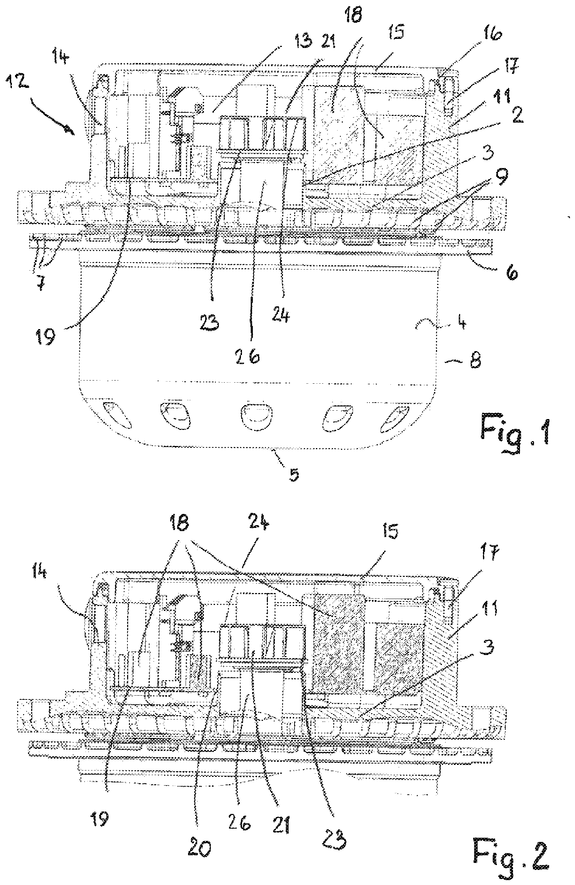

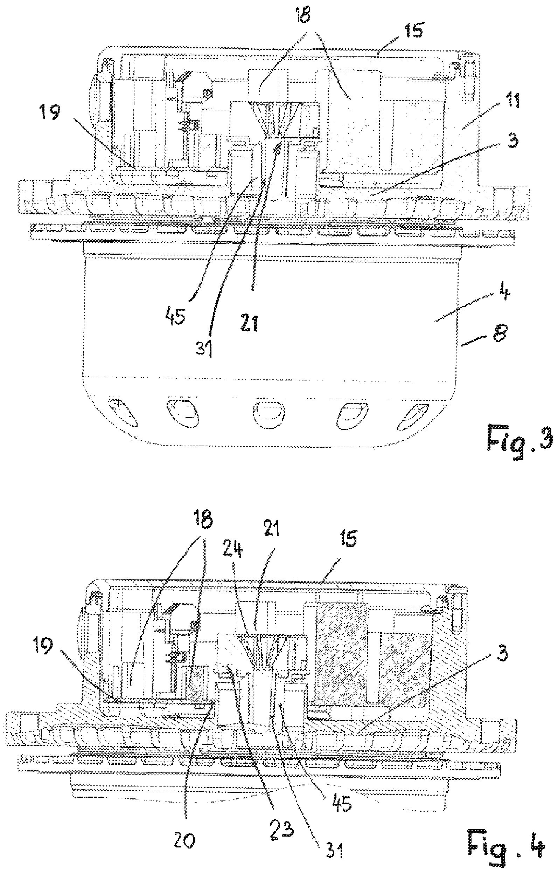

Zur Befestigung des Grundkörpers 25 auf der Rotorwelle wird das Anschlussteil 26 herangezogen, das ein Kupplungsstück für das Lüfterrad 21 bildet. Mit Hilfe des Anschlussteiles 26 ist es möglich, das Lüfterrad 21 so im Einbauraum 13 anzuordnen, dass es die Kühlluft an sämtliche im Einbauraum befindlichen Komponenten 18 fördern kann. Wie beispielhaft aus den Fig. 1 bis 6 hervorgeht, befindet sich das Lüfterrad 21 bzw. sein Grundkörper 25 mit Abstand von der Leiterplatine 19 im Einbauraum 13, so dass die elektrischen/elektronischen Komponenten 18 zuverlässig mit Kühlluft beaufschlagt werden können.

Das Anschlussteil 26 hat eine Hülse 45, die sich in Richtung auf ihr freies Ende konisch verjüngt und innenseitig an die Befestigungshülse 31 des Grundkörpers 25 so angepasst ist, dass bei montiertem Lüfterrad 21 die Befestigungshülse 31 der Innenwand der Hülse 45 mit geringem radialem Spiel, zum Beispiel 0,2 bis 0,3 mm, gegenüberliegt. Der Grundkörper 25 wird mit seiner Befestigungshülse 31 in die Hülse 45 des Anschlusstelles 26 eingesetzt. Eine Ausrichtung des Grundkörpers 25 gegenüber dem Anschlussteil 26 in Umfangsrichtung ergibt sich dadurch, dass die Rippen 29 des Grundkörpers 25 in die Vertiefungen 30 des Anschlussteiles 26 eingreifen.

Das Anschlusstell 26 hat die Bodenscheibe 23, an der bei montiertem Grundkörper 25 die Schaufeln 22 und die Hohlkammern 37 mit ihren Rändern aufliegen. Im Ausführungsbelspiel hat die Bodenscheibe 23 des Anschlussteiles 26 geringfügig größeren Außendurchmesser als die Deckscheibe 24 des Grundkörpers 25. Beide Scheiben können aber auch gleichen Außendurchmesser haben.

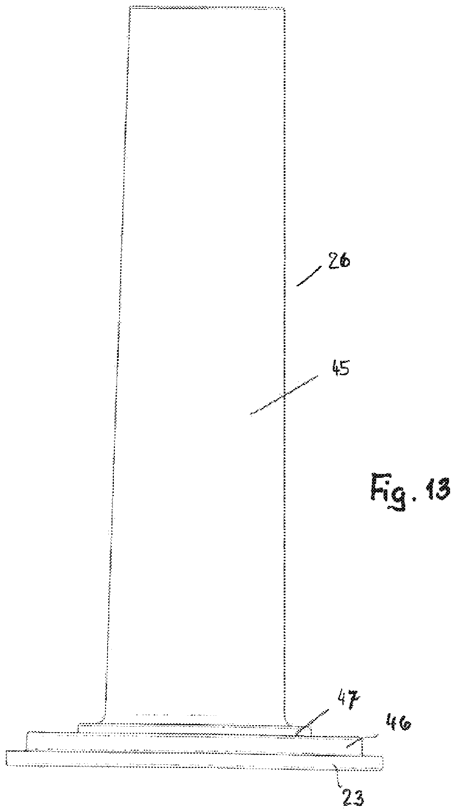

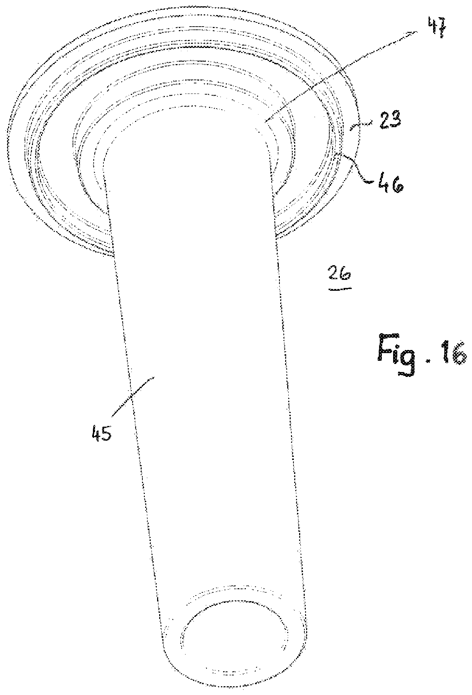

An der vom Grundkörper 25 abgewandten Unterseite liegt an der Bodenscheibe 23 eine Zwischenscheibe 46 an (Fig. 13 und 16), die kleineren Außendurchmesser und kleineren Innendurchmesser als die Bodenscheibe 23 hat. In der Zwischenscheibe 46 befinden sich die Vertiefungen 30, in welche die Rippen 29 des Grundkörpers 25 eingreifen.

An die von der Bodenscheibe 23 abgewandte Unterseite der Zwischenscheibe 46 schließt eine Endscheibe 47 an (Fig. 13), die kleineren Außendurchmesser als die Zwischenscheibe 46 hat und von weicher zentrisch die Hülse 45 absteht.

Der Innendurchmesser der Bodenscheibe 23 entspricht dem Außendurchmesser der Zwischenscheibe 28 des Grundkörpers 25. Dadurch ist der Grundkörper 25 in der Einbaulage nicht nur in Umfangsrichtung, sondern auch in Radialrichtung einwandfrei gegenüber dem Anschlussteil 26 ausgerichtet.

Von der Innenwand der Hülse 45 stehen radial nach innen Rippen 48 ab (Fig. 12), die sich zumindest über einen Teil der axialen Länge der Hülse 45 erstrecken und diese verstärken. Im Ausführungsbeispiel sind abwechselnd radial kürzere und längere Rippen 48 vorgesehen, die jeweils in Winkelabständen von 45° angeordnet sind.

Zur Montage des Lüfterrades 21 wird der Grundkörper 25 in das Anschlussteil 26 eingesetzt. Die Ausrichtung der beiden Teile des Lüfterrades 21 erfolgt über die Rippen 29 (in Umfangsrichtung) sowie über den Rand der Zwischenscheibe 28 und der Bodenscheibe 23 (in Radialrichtung). Anschließend wird von der Seite der Deckscheibe 24 aus eine Befestigungsschraube durch die Befestigungshülse 31 und die Öffnung 33 gesteckt und in die stirnseitige Gewindebohrung der Rotorwelle geschraubt. Die Rippen 48 dienen hierbei zur Führung der Befestigungsschraube. Außerdem dienen sie als Anschlag für das Anschlussteil 26, das mit den Rippen 48 axial an der Rotorwelle anliegt. Der Grundkörper 25 liegt mit seiner Abschlussscheibe 32 auf den Rippen 48 der Anschlussteiles 26 auf. Beide Teile des Lüfterrades 21 werden beim Anziehen der Befestigungsschraube in axialer Richtung infolge der Anlage der Abschlussscheibe 32 des Grundkörpers 25 an den Rippen 48 des Anschlussteiles 26 axial fest gegeneinander verspannt und auf der Rotorwelle befestigt. Die Hülse 45 weist am freien Ende einen solchen Innendurchmesser auf, dass sie die Rotorwelle übergreifen kann, so dass das Lüfterrad 21 quer zur Achsrichtung zuverlässig mit der Rotorwelle drehfest verbunden ist. Die Rippen 48 sind in einem solchen Abstand vom freien Ende der Hülse 45 vorgesehen, dass das Anschlussteil 26 die Rotorwelle ausreichend weit umgreifen kann.

Je nach axialem Abstand des Einbauraumes 13 von der Rotorwelle haben die Befestigungshülse 31 des Grundkörpers 25 und die Hülse 45 des Anschlussteiles 26 unterschiedliche axiale Länge, so dass je nach Bauform des Elektromotors das Lüfterrad 21 in der für die Kühlung der Komponenten 18 erforderlichen Lage im Einbauraum 13 eingebaut werden kann.

Auch das Unterteil 26 ist vorteilhaft einstückig aus Kunststoff hergestellt, vorteilhaft durch Spritzgießen.

Anstelle der zweiteiligen Gestaltung kann das Lüfterrad 21 auch nur aus dem Grundkörper 25 bestehen. In diesem Fall bildet die Zwischenscheibe 28 die Bodenscheibe, die im Zusammenspiel mit der Deckscheibe 24 und den Schaufeln 22, 22' für den beschriebenen Kühlluftstrom sorgt.

## Patentansprüche

1. Elektromotor mit einem Rotor (8), einem Stator (1), einem Elektronikgehäuse (12), in dessen Einbauraum (13) elektrische/elektronische Komponenten (18) untergebracht sind, von denen zumindest ein Teil auf einer Leiterplatine (19) sitzt, und mit einem drehfest mit der Rotorwelle verbundenen Lüfterrad (21), welches zusammen mit dem Rotor (8) dreht und das innerhalb des Einbauraumes (13) angeordnet und so ausgebildet ist, dass es einen Kühlkreisstrom im Einbauraum (13) erzeugt, indem die Luft zentral vom Lüfterrad (21) angesaugt und etwa radial nach außen abgegeben wird,
**dadurch gekennzeichnet, dass** das Lüfterrad (21) im Bereich zwischen den elektrischen/elektronischen Komponenten (18) angeordnet ist, die um das Lüfterrad (21) verteilt angeordnet sind, dass die Seitenwand (11) des Einbauraumes (13) und ein den Einbauraum (13) verschließender Deckel (15) Führungen für den Kühlkreisstrom bilden, dass das Lüfterrad (21) Schaufeln (22, 22') aufweist, die im Bereich zwischen einer Deckscheibe (24) und einer Bodenscheibe (23) liegen, und dass sich das Lüfterrad (21) auf der von einem Statorflansch (3) abgewandten Seite der Leiterplatine (19) befindet.

2. Elektromotor nach Anspruch 1,
**dadurch gekennzeichnet, dass** das Lüfterrad (21) zentrisch im Einbauraum (13) angeordnet ist.

3. Elektromotor nach Anspruche 1 oder 2,
**dadurch gekennzeichnet, dass** die Innenwand des Einbauraumes (13) im Wesentlichen zylindrisch ausgebildet ist.

4. Elektromotor nach einem der Ansprüche 1 bis 3,
**dadurch gekennzeichnet, dass** die Leiterplatine (19) mit Abstand vom Statorflansch (3) angeordnet ist, der den Einbauraum (13) gegen den Rotor (8) hin abschließt.

5. Elektromotor nach einem der Ansprüche 1 bis 4,
**dadurch gekennzeichnet, dass** an den Statorflansch (3) eine Statorbuchse (2) anschließt, in der die Rotorwelle drehbar gelagert ist.

6. Elektromotor nach einem der Ansprüche 1 bis 5,
**dadurch gekennzeichnet, dass** das Lüfterrad (21) wenigstens zweiteilig ausgebildet ist und aus einem die Schaufeln (22, 22') enthaltenden Grundkörper (25) und einem Anschlussteil (26) besteht, mit denen das Lüfterrad (21) drehfest mit der Rotorwelle verbunden ist.

7. Elektromotor nach Anspruch 6,
**dadurch gekennzeichnet, dass** der Grundkörper (25) die Deckscheibe (24) und das Anschlussteil (26) die Bodenscheibe (23) für die Schaufeln (22, 22') aufweist.

8. Elektromotor nach Anspruch 6 oder 7,
**dadurch gekennzeichnet, dass** der Grundkörper (25) und das Anschlussteil (26) mit jeweils einer Hülse (31, 45) ineinander greifen.

9. Elektromotor nach Anspruch 8,
**dadurch gekennzeichnet, dass** die Hülse (31) des Grundkörpers (25) mit Spiel der Innenwand der Hülse (45) des Anschlussteiles (26) gegenüberliegt.

## Claims

1. An electric motor comprising a rotor (8), a stator (1), an electronics housing (12), in the installation space (13) of which electrical/electronic components (18) are accommodated, of which at least a portion sit on a printed circuit board (19), and a fan wheel (21) which is connected to the rotor shaft in a rotationally fixed manner and which rotates together with the rotor (8) and which is arranged inside the installation space (13) and is constructed in such a manner that it generates a cooling circuit flow in the installation space (13), in that the air is sucked in centrally by the fan wheel (21) and output approximately radially outwards,
**characterized in that** the fan wheel (21) is arranged in the region between the electrical/electronic components (18), which are arranged in a distributed manner around the fan wheel (21), **in that** the side wall (11) of the installation space (13) and a cover (15) closing the installation space (13) form guides for the cooling circuit flow, **in that** the fan wheel (21) has blades (22, 22'), which are located in the region between a top disc (24) and a bottom disc (23), and **in that** the fan wheel (21) is located on the side of the printed circuit board (19) facing away from a stator flange (3).

2. The electric motor according to Claim 1,
**characterized in that** the fan wheel (21) is arranged centrally in the installation space (13).

3. The electric motor according to Claims 1 or 2, **characterized in that** the internal wall of the installation space (13) is constructed in a substantially cylindrical manner.

4. The electric motor according to one of Claims 1 to 3, **characterized in that** the printed circuit board (19) is arranged with spacing from the stator flange (3), which closes the installation space (13) towards the rotor (8).

5. The electric motor according to one of Claims 1 to 4, **characterized in that** a stator bushing (2) adjoins the stator flange (3), in which bushing the rotor shaft is rotatably mounted.

6. The electric motor according to one of Claims 1 to 5, **characterized in that** the fan wheel (21) is of at least two-part construction and consists of a base body (25), containing the blades (22, 22'), and a connecting piece (26), using which the fan wheel (21) is connected to the rotor shaft in a rotationally fixed manner.

7. The electric motor according to Claim 6, **characterized in that** the base body (25) has the top disc (24) and the connecting piece (26) has the bottom disc (23) for the blades (22, 22').

8. The electric motor according to Claim 6 or 7, **characterized in that** the base body (25) and the connecting piece (26) engage into one another using a bush (31, 45) in each case.

9. The electric motor according to Claim 8, **characterized in that** the bush (31) of the base body (25) is opposite the internal wall of the bush (45) of the connecting piece (26) with clearance.

## Revendications

1. Moteur électrique pourvu d'un rotor (8), un stator (1), un boîtier électronique (12), dans l'espace d'installation (13) duquel sont renfermés des composants électriques/électroniques (18), dont au moins une partie repose sur une carte de circuit imprimé (19), et comportant une roue de ventilateur (21) reliée de manière solidaire en rotation à l'arbre du rotor, qui tourne conjointement au rotor (8) et qui est disposée à l'intérieur de l'espace d'installation (13) et conçue de manière à générer un flux de circuit de refroidissement dans l'espace d'installation (13) par l'air aspiré centralement par la roue de ventilateur (21) et évacué approximativement radialement vers l'extérieur,
**caractérisée en ce que** la roue de ventilateur (21) est disposée dans la zone entre les composants électriques/électroniques (18) qui sont répartis autour de la roue de ventilateur (21), **en ce que** la paroi latérale (11) de l'espace d'installation (13) et un couvercle (15) qui ferme l'espace d'installation (13) forment des guides pour le flux du circuit de refroidissement, **en ce que** la roue de ventilateur (21) présente des pales (22, 22') qui se trouvent dans la zone entre un disque de couverture (24) et un disque de fond (23) et **en ce que** la roue de ventilateur (21) se trouve sur le côté de la carte de circuit imprimé (19) à l'opposé d'une bride de stator (3).

2. Moteur électrique selon la revendication 1, **caractérisée en ce que** la roue de ventilateur (21) est disposée au centre de l'espace d'installation (13) .

3. Moteur électrique selon la revendication 1 ou 2, **caractérisée en ce que** la paroi interne de l'espace d'installation (13) a une forme essentiellement cylindrique.

4. Moteur électrique selon une quelconque des revendications 1 à 3,
**caractérisée en ce que** la carte de circuit imprimé (19) est disposée à distance de la bride de stator (3) qui isole de manière étanche l'espace d'installation (13) par rapport au rotor (8).

5. Moteur électrique selon une des revendications 1 à 4,
**caractérisée en ce qu'**un manchon de stator (2) est fixé sur la bride de stator (3), dans lequel l'arbre de rotor est positionné rotativement.

6. Moteur électrique selon une des revendications 1 à 5,
**caractérisée en ce que** la roue de ventilateur (21) est configurée en au moins deux parties et est constituée d'un corps de base (25) contenant les pales (22, 22') et d'une pièce de raccord (26), avec laquelle la roue de ventilateur (21) est reliée de manière solidaire en rotation à l'arbre du rotor.

7. Moteur électrique selon la revendication 6, **caractérisée en ce que** le corps de base (25) présente le disque de couverture (24) et la pièce de raccord (26) présente le disque de fond (23) pour les pales (22, 22').

8. Moteur électrique selon la revendication 6 ou 7, **caractérisée en ce que** le corps de base (25) et la pièce de raccord (26) viennent en prise l'un avec l'autre au moyen d'un manchon (31, 45).

9. Moteur électrique selon la revendication 8, **caractérisée en ce que** le manchon (31) du corps de base (25) se trouve en vis à vis de la paroi intérieure du manchon (45) de la pièce de raccord (26) avec du jeu.
